(19) **Europäisches Patentamt / European Patent Office / Office européen des brevets**

(11) **EP 1 614 998 B1**

(12) # EUROPEAN PATENT SPECIFICATION

(45) Date of publication and mention
of the grant of the patent:
**09.09.2009 Bulletin 2009/37**

(51) Int Cl.:
**G01D 5/347** *(2006.01)*

(21) Application number: **05014559.8**

(22) Date of filing: **05.07.2005**

(54) **Sensor head of reflective optical encoder**

Sensorkopf mit optischem Reflexions-Kodierer

Tête de mesure avec un codeur optique réflectif

(84) Designated Contracting States:
**DE FR GB**

(30) Priority: **09.07.2004 JP 2004203753**

(43) Date of publication of application:
**11.01.2006 Bulletin 2006/02**

(73) Proprietor: **Olympus Corporation
Shibuya-ku, Tokyo (JP)**

(72) Inventor: **Ito, Takeshi
c/o Intellectual Property Department
Hachioji-shi
Tokyo (JP)**

(74) Representative: **Winter, Brandl, Fürniss, Hübner
Röss, Kaiser,
Polte Partnerschaft Patent- und
Rechtsanwaltskanzlei
Alois-Steinecker-Strasse 22
85354 Freising (DE)**

(56) References cited:
**EP-A- 0 548 848       EP-A- 1 154 242
US-A- 5 670 781**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an optical encoder.

Currently, so-called encoders such as optical and magnetic encoders have been used to detect displacement amounts in a linear direction for machine tool stages, three-dimensional measurement instruments, and the like, and to detect rotational angles for servo motors and the like.

An optical encoder generally comprises a scale fixed to a displacement measurement target such as a stage and a sensor head to detect the displacement of the scale. The scale has a movement detection pattern whose optical characteristics change periodically in the moving direction. The sensor head has a lightemitting unit to apply a light beam to the scale and a detector to detect the light beam modulated by the scale. The moving amount of the scale is calculated on the basis of a change in intensity of the light beam detected by the detector.

An optical encoder has characteristics such as high precision, high resolution, noncontact, and high electromagnetic interference resistance, and hence is used in various fields. As encoders demanding high precision and high resolution, in particular, optical encoders are most popular.

Document EP-A2-1 154 242 discloses an encoder with two detectors arranged on one semiconductor substrate. US-5 670 781 discloses an encoder with a plurality of detectors on a plurality of substrates.

One optical encoder can not only merely measure the moving amount but also detect a predetermined reference position. In an optical encoder of this type, the scale has a movement detection pattern and reference position detection pattern. The sensor head has a detector that detects light from the movement detection pattern and a detector that detects light from the reference position detection pattern. In general, wiring lines from the two detectors extend independently of each other. Accordingly, the number of wiring lines extending from the sensor head is comparatively large. This applies a load to the wiring operation.

The present invention has been made in consideration of the above situation, and has as its object to provide a reflective optical encoder in which the load of the wiring operation is decreased.

The present invention is directed to a sensor head that is combined with a scale having an optical pattern to constitute a reflective optical encoder. The sensor head according to the present invention has a light source that projects a light beam to be applied to the scale, and two semiconductor substrates. The semiconductor substrates respectively have photodetectors that detect the light beam reflected and modulated by the optical pattern of the scale and electrical pads that are configured to be connected to an external circuit, the semiconductor substrates each having an electrical circuit that processes signals output from the photodetectors. The electrical circuits are arranged on the two substrates considering their characteristics. The sensor head also has electric wiring lines that electrically connect the electrical pads of the two semiconductor substrates and a package that contains the light source and semiconductor substrates.

According to the present invention, there is provided a reflective optical encoder in which the number of wiring lines extending from a sensor head is decreased. This decreases a load of the wiring operation.

This summary of the invention does not necessarily describe all necessary features so that the invention may also be a sub-combination of these described features.

The invention can be more fully understood from the following detailed description when taken in conjunction with the accompanying drawings, in which:

FIG. 1 shows a reflective optical encoder according to the first embodiment of the present invention;
FIG. 2 is a sectional view taken along the line II - II of the reflective optical encoder shown in FIG. 1;
FIG. 3 is a view, seen from the scale side, of the sensor head of the reflective encoder shown in FIG. 1;
FIG. 4 shows the circuit configuration of the sensor head shown in FIG. 3;
FIG. 5 is a plan view of the scale shown in FIG. 1;
FIG. 6 shows an A-phase signal, B-phase signal, and Z-phase signal detected by the sensor head;
FIG. 7 shows different electric wiring lines that may be employed in place of the electric wiring lines shown in FIG. 4;
FIG. 8 shows the concept of the basic arrangement of a transmissive optical encoder that uses a Talbot image;
FIG. 9 shows another light source using an LED that may be employed in place of, e.g., the light source shown in FIG. 3;
FIG. 10 is a perspective view of a sensor head in a reflective optical encoder according to the second embodiment of the present invention;
FIG. 11 is a sectional view of the reflective optical encoder including the sensor head shown in FIG. 10;
FIG. 12 is a plan view, seen from the scale side, of the sensor head shown in FIG. 10;
FIG. 13 is a sectional view of a sensor head in a reflective optical encoder according to the third embodiment of the present invention;
FIG. 14 is a plan view, seen from the scale side, of the sensor head shown in FIG. 13; and
FIG. 15 is a plan view, seen from the scale side, of a portion of a sensor head according to a modification of the third embodiment, the portion including a transparent member and semiconductor substrates.

Embodiments of the present invention will be described below with reference to the views of the accompanying drawing.

First Embodiment

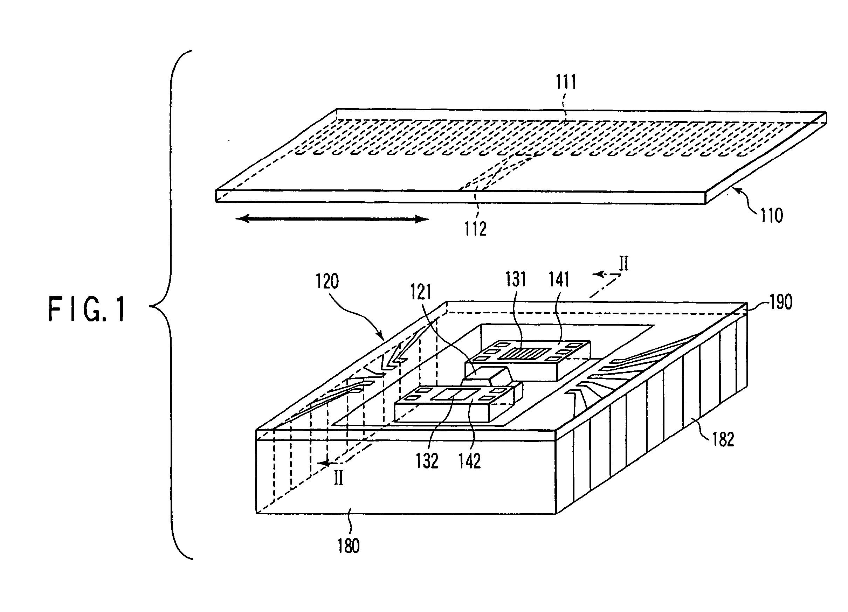

FIG. 1 shows a reflective optical encoder according to the first embodiment of the present invention. As shown in FIG. 1, the reflective optical encoder comprises a scale 110 and a sensor head 120. The scale 110 is attached to a movement detection target, which can move relative to the sensor head 120. The sensor head 120 detects the movement of the scale 110. The scale 110 can move with respect to the sensor head 120 in directions of arrows.

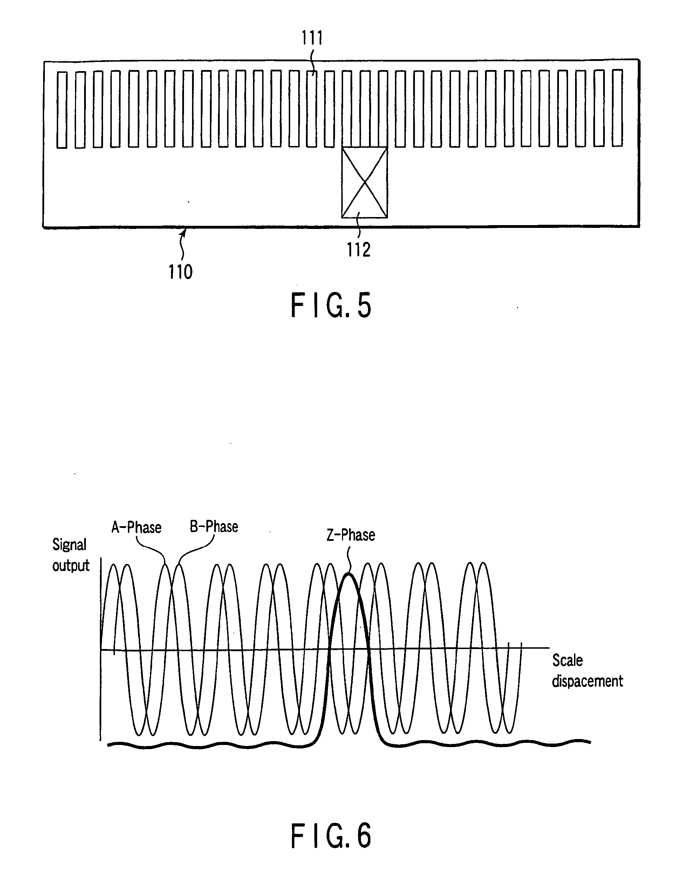

As shown in FIG. 5, the scale 110 has two types of optical patterns, i.e., a movement detection pattern 111 and a reference position detection pattern 112.
The movement detection pattern 111 and reference position detection pattern 112 are respectively formed on two tracks that extend adjacent to each other in the moving direction. The movement detection pattern 111 has a periodic structure in the moving direction. The reference position detection pattern 112 is provided at one portion in the moving direction.

The sensor head 120 comprises a light source 121 for projecting a light beam to be applied to the scale 110, two semiconductor substrates 141 and 142, and a package containing the light source 121 and semiconductor substrates 141 and 142. The package comprises a box-like housing 180 and a lid member 190 having a portion that transmits light. The lid member 190 is attached to the housing 180 to close the opening of the housing 180. The housing 180 has electrode terminals 182 that are configured to be connected to an external circuit.

The semiconductor substrate 141 has a moving amount detection photodetector 131 for detecting the light beam reflected and modulated by the movement detection pattern 111 of the scale 110. The semiconductor substrate 142 has a reference position detection photodetector 132 for detecting the light beam reflected and modulated by the reference position detection pattern 112 of the scale 110.

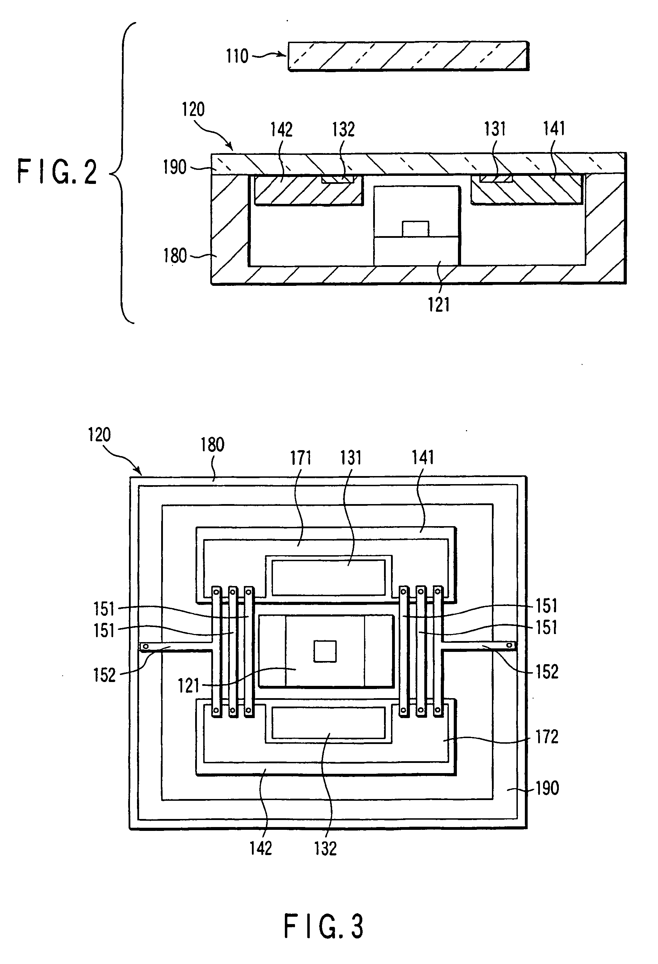

FIG. 2 is a sectional view taken along the line II - II of the reflective optical encoder shown in FIG. 1. As shown in FIG. 2, the light source 121 is fixed to the housing 180. The semiconductor substrates 141 and 142 are fixed to the lid member 190 by, e.g., flip-chip bonding.

FIG. 3 is a view, seen from the scale side, of the sensor head of the reflective encoder shown in FIG. 1. As shown in FIG. 3, the semiconductor substrates 141 and 142 having the moving amount detection photodetectors 131 and 132, respectively, are arranged on the two sides of the light source 121 in a direction substantially perpendicular to the moving direction of the scale 110. The semiconductor substrate 141 is provided with an electrical circuit 171 on a part of its region excluding the moving amount detection photodetector 131. The semiconductor substrate 142 is provided with an electrical circuit 172 on a part of its region excluding the reference position detection photodetector 132. The electrical circuits 171 and 172 on the semiconductor substrates 141 and 142 are electrically connected to each other through electric wiring lines 151 and 152.

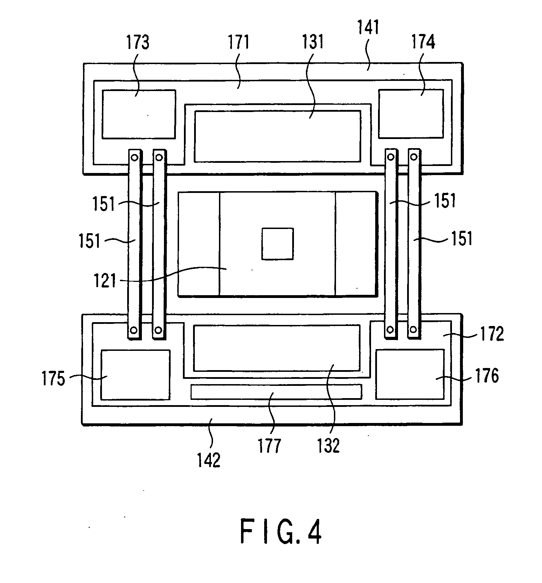

FIG. 4 shows the circuit configuration of the sensor head shown in FIG. 3. As shown in FIG. 4, the electrical circuit 171 on the semiconductor substrate 141 includes an I/V converting circuit 173 that I/V-converts a photocurrent output from the moving amount detection photodetector 131 and a light source driving circuit 174 for driving the light source 121. The electrical circuit 172 on the semiconductor substrate 142 includes an I/V converting circuit 177 that I/V-converts a photocurrent output from the reference position detection photodetector 132, a digital circuit 175 that pulses the I/V-converted analog signal, and an interpolator 176 that interporates a periodical analog signal accompanying the movement of the scale 110 and outputs it as a pulse.

These electrical circuits are arranged considering their characteristics.

It is not preferable to transmit output signals from the moving amount detection photodetector 131 and reference position detection photodetector 132 to another semiconductor substrate as photocurrents. This is because the photocurrents may be largely influenced by noise from the connecting wiring lines. For this reason, the I/V converting circuit 173 is formed on the semiconductor substrate 141 that has the moving amount detection photodetector 131. The I/V converting circuit 177 is formed on the semiconductor substrate 142 that has the reference position detection photodetector 132.

A moving amount detection signal output from the I/V converting circuit 173 reflects the movement of the scale 110. A reference position detection signal output from the I/V converting circuit 177 reflects the presence/absence of the reference position of the scale 110.

If these signals (the moving amount detection signal and reference position detection signal) are superposed with noise from the digital circuit 175 and interpolator 176, it appears as a sharp change. In other words, the noise from the digital circuit 175 and interpolator 176 causes a sharp change in the moving amount detection signal and reference position detection signal. A similar sharp change is also caused by the reciprocal movement of the scale 110 within a short period of time. In other words, the reciprocal movement of the scale 110 within the short period of time also causes a sharp change in the moving amount detection signal and reference position detection signal.

In detection of the reference position, the reciprocal movement of the scale 110 within a short period of time is not significant. Accordingly, a sharp change in the reference position detection signal may be neglected as noise. In detection of the moving amount, the reciprocal movement of the scale 110 within a short period of time is the information that should be detected. Accordingly, a sharp change in the moving amount detection signal cannot be neglected as noise.

In other words, the moving amount detection signal output from the I/V converting circuit 173 is readily susceptible to noise from the digital circuit 175 and interpolator 176. Therefore, the I/V converting circuit 173 is desirably formed on a semiconductor substrate that is different from the semiconductor substrate on which the digital circuit 175 and interpolator 176 are formed. The reference position detection signal output from the I/V converting circuit 177 is not readily susceptible to noise from the digital circuit 175 and interpolator 176. Therefore, if the I/V converting circuit 177 is formed on the same semiconductor substrate on which the digital circuit 175 and interpolator 176 are formed, it will not cause much trouble.

For this reason, the digital circuit 175 and interpolator 176 are formed on the semiconductor substrate 142 that is different from the semiconductor substrate 141 that has the I/V converting circuit 173. The I/V converting circuit 177 is formed on the semiconductor substrate 142 that has the digital circuit 175.

The light source driving circuit 174 is not likely to generate noise and accordingly arranged on the semiconductor substrate 141 that has the moving amount detection photodetector 131. The light source driving circuit 174, however, generates heat and may negligibly influence the circuit characteristics depending on the position where it is mounted. Therefore, the position to mount the light source driving circuit 174 must be selected carefully.

Referring back to FIG. 3, the electric wiring lines 151 and 152 are formed on that surface of the lid member 190 which faces the semiconductor substrates 141 and 142. The two electrical circuits 171 and 172 are electrically connected to each other through the electric wiring lines 151 and 152. The electric wiring lines 151 only connect the electrical circuits 171 and 172 and are not exposed outside the package. The electric wiring lines 152 are connected to the electrode terminals 182 formed on the housing 180 and configured to be connected to the external circuit. The electrical circuits 171 and 172 are designed to be operated by the same driving voltage Vcc. Hence, a ground voltage Vgnd and the driving voltage Vcc from the external circuit are applied to the electrode terminals 182 of the package. The electric wiring lines 152 from the electrode terminals 182 branch as the electric wiring lines 152 shown in FIG. 3 and extend to the two electrical circuits 171 and 172.

The electric wiring lines formed on the lid member 190 include not only the electric wiring lines 151 that merely connect the electrical circuits 171 and 172 and the electric wiring lines 152 that connect the electrical circuits 171 and 172 and are configured to be connected to the external circuit through the package but also electric wiring lines or the like that extend from the electrical circuit 171 or the electrical circuit 172 or both, as needed, to the package but not to the other one.

The operation of the reflective encoder will be described.

Referring to FIG. 1, part of the light beam projected from the light source 121 is reflected and modulated by the movement detection pattern 111 on the scale 110 and enters the moving amount detection photodetector 131. The intensity of the light beam entering the moving amount detection photodetector 131 changes periodically in accordance with the movement of the movement detection pattern 111. Hence, the moving amount detection photodetector 131 outputs a signal current that changes substantially periodically in accordance with the movement of the scale 110 to the I/V converting circuit 173 in the electrical circuit 171. The I/V converting circuit 173 I/V-converts the input signal current into a voltage signal. This voltage signal contains periodical signals called A- and B-phase signals the phases of which are different from each other by 90°, as shown in FIG. 6.

Part of the light beam projected from the light source 121 is applied to that track on the scale 110 which the reference position detection pattern 112 is formed on. When the scale 110 is at the reference position, the reference position detection pattern 112 is located on the optical path of the light beam. The light beam reflected by the reference position detection pattern 112 enters the reference position detection photodetector 132. When the scale 110 is not at the reference position, the reference position detection pattern 112 is off the optical path of the light beam. A very small quantity of light beam reflected by the surface of the scale 110 enters the reference position detection photodetector 132. The reference position detection photodetector 132 outputs a signal current that changes almost in a binary manner in accordance with the presence/absence of the reference position detection pattern 112 to the I/V converting circuit 177 in the electrical circuit 172. The I/V converting circuit 177 I/V-converts the input signal current into a voltage signal. This voltage signal is a so-called Z-phase signal and shows a high output voltage, as shown in FIG. 6, when the scale 110 is located near the reference position. Therefore, whether or not the scale 110 is located at the reference position can be determined on the basis of the Z-phase signal.

The A- and B-phase signals output from the I/V converting circuit 173 of the electrical circuit 171 are input to the digital circuit 175 in the electrical circuit 172 through the electric wiring lines 151 or 152 and converted into pulses. The Z-phase signal output from the I/V converting circuit 177 in the electrical circuit 172 is also input to the digital circuit 175 and pulsed.

According to this embodiment, the electrical circuits to be formed on the two semiconductor substrates 141 and 142 are arbitrarily distributed between the empty regions of the two semiconductor substrates 141 and 142 considering various respects, e.g., the functions, roles, and circuit feature sizes of the electrical circuits, and whether or not each circuit affects the other electrical circuits as a noise source. With this arrangement, the electrical circuits to be mounted on the semiconductor substrates can be optimized, and the qualities of the electrical circuits can be improved. More specifically, the I/V converting circuit 173 outputs the moving amount detection signal that is readily susceptible to the noise from the digital circuit 175 and interpolator 176. The I/V converting circuit 173 is formed on the semiconductor substrate 141 that is different from the semiconductor substrate 142 that has the digital circuit 175 and interpolator 176. This can minimize the influence on the I/V converting circuit 173. Thus, a circuit configuration that is not influenced by noise as a whole can be obtained.

The electrical circuits on the two semiconductor substrates 141 and 142 are connected in the package to decrease the number of terminals that serve for connection with the external circuit, e.g., a power supply.

Since the electrical circuits 171 and 172 on the semiconductor substrates 141 and 142 are electrically connected to each other through the electric wiring lines 151 and 152, the electrical circuits 171 and 172 can share a reference current generation circuit and reference voltage generation circuit. That is, the electrical circuits 171 and 172 can share a reference signal (e.g., a reference voltage or reference current). Therefore, the circuit feature size can be decreased. One reference voltage and one reference current can be shared by circuits so that stable circuit operation can be expected.

From the above description, downsizing, cost reduction, and high performance of the reflective optical encoder are enabled.

According to this embodiment, the sensor head 120 has the two semiconductor substrates 141 and 142. The sensor head 120 may further comprise another semiconductor substrate that has an electrical circuit. The electrical circuit on this additional semiconductor substrate may be electrically connected to the electrical circuits 171 and 172 on the semiconductor substrates 141 and 142.

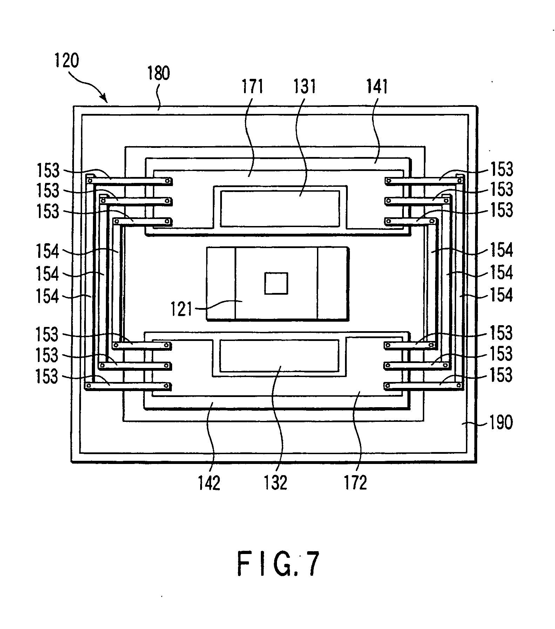

According to this embodiment, the electric wiring lines 151 and 152 that electrically connect the electrical circuits 171 and 172 on the semiconductor substrates 141 and 142 are wiring patterns formed on the surface of the lid member 190, as shown in FIG. 3. The electric wiring lines 151 and 152 may be of any type as far as they can be connected in the package. For example, as shown in FIG. 7, desired terminals of the electrical circuits 171 and 172 may be electrically connected to each other by using electric wiring lines 153 formed on the lid member 190 and electric wiring lines 154 formed on the housing 180. Furthermore, the electric wiring lines 154 may be formed in the housing 180.

According to this embodiment, the light beam that is projected from the light source 121 and then directly reflected by the scale 110 is detected. To further improve the performance, a so-called Talbot image may be employed.

A Talbot image will be described. For the sake of simplicity, the following description will be made on the assumption of a transmissive encoder. However, the same argument holds for a reflective encoder.

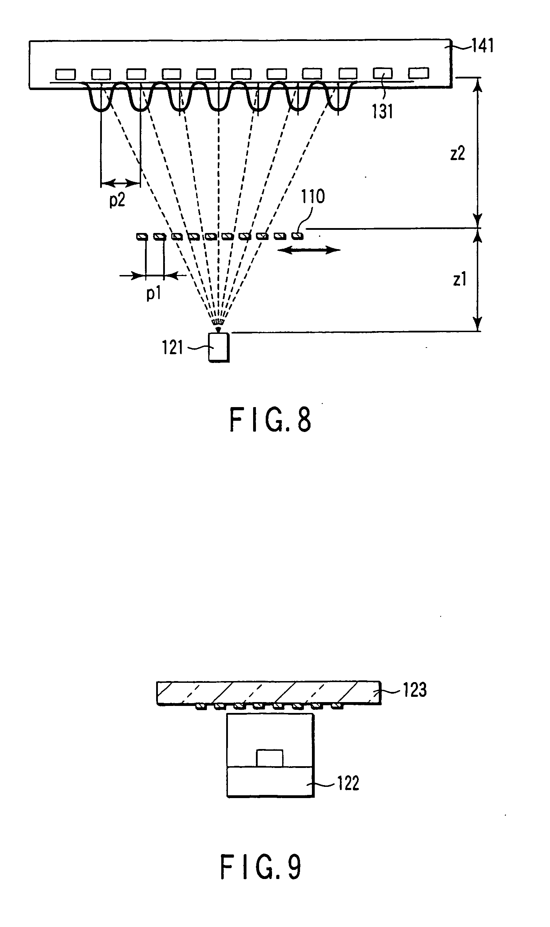

FIG. 8 shows the concept of the basic arrangement of a transmissive optical encoder that uses a Talbot image. Referring to FIG. 8, assume that $z1$ is the distance between the light source 121 and the movement detection pattern 111 of the scale 110, $z2$ is the distance between the movement detection pattern 111 of the scale 110 and the moving amount detection photodetector 131, $p1$ is the pitch of the scale pattern, and $p2$ is the pitch of a Talbot image projected onto the light-receiving surface of the moving amount detection photodetector 131.

When $z1$ and $z2$ satisfy the relation represented by the following equation (1), a bright and dark pattern similar to the scale pattern is known to be projected on the moving amount detection photodetector 131. The bright and dark pattern is called the Talbot image.

$$(1/z1) + (1/z2) = \lambda / (k(p1)^2) \quad \ldots (1)$$

where $\lambda$ is the wavelength of the light beam projected from the light source 121, and $k$ is an integer.

To form a Talbot image, the light source 121 must substantially be a point light source. As a substantial point light source, an edge emitting laser, surface-emitting laser, current confinement type LED, or the like can be used.

As shown in FIG. 9, the light source 121 may comprise an ordinary LED 122 in place of a substantial point light source. In this case, a transparent plate 123 having a slit is arranged on the optical path along which a light beam projected from the LED 122 is directed to the scale 110. The slit may have a single aperture, or apertures that are periodically arranged at a predetermined period. With this arrangement, even with an ordinary LED having a short coherence length, a bright and dark pattern similar to a scale pattern, like a Talbot image, can be obtained. The slit may be formed, with the same method as that for the electric wiring lines, on that portion of the lid member 190 which is located on the optical path along which the light beam projected from the LED 122 is directed to the scale.

The pitch of the Talbot image projected onto the moving amount detection photodetector 131 can be calculated by the following equation (2):

$$p2 = p1 \times (z1 + z2)/z1 \quad \ldots(2)$$

By using the Talbot image, a high-performance optical encoder can be formed with a comparatively simple arrangement.

Second Embodiment

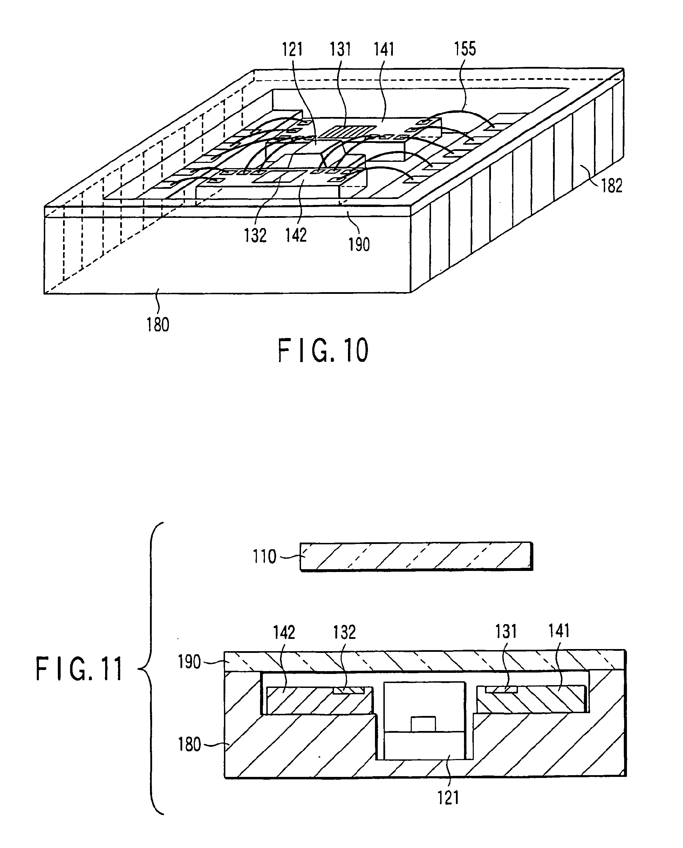

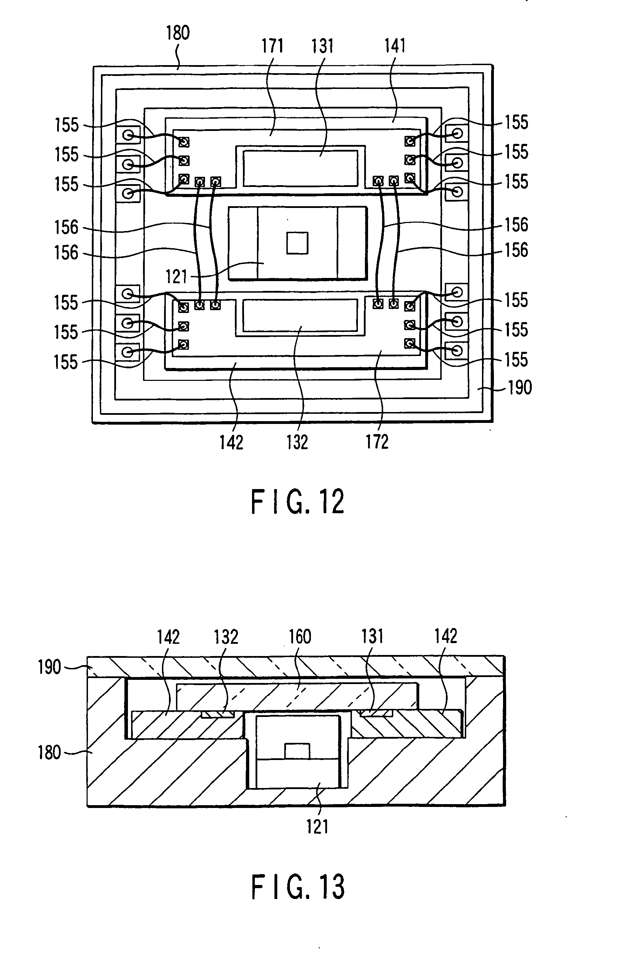

FIG. 10 is a perspective view of a sensor head in a reflective optical encoder according to the second embodiment of the present invention. FIG. 11 is a sectional view of the reflective optical encoder including the sensor head shown in FIG. 10. The section of FIG. 11 corresponds to the section of FIG. 2. FIG. 12 is a plan view, seen from the scale side, of the sensor head shown in FIG. 10. Referring to FIGS. 10, 11, and 12, members indicated by the same reference numerals as those shown in FIGS. 1 and 2 are similar members, and a detailed description thereof will be omitted.

The basic arrangement and operation of the reflective optical encoder of the second embodiment are similar to those of the reflective optical encoder of the first embodiment. A description will be made on portions that are different from their equivalents in the first embodiment.

As shown in FIGS. 10 and 11, a light source 121 and semiconductor substrates 141 and 142 are all fixed to a housing 180. The electrodes on the semiconductor substrates 141 and 142 are electrically connected to the electrodes on the housing 180 through bonding wires 155.

The housing 180 has a cavity to attach the light source 121, and rest-shaped portions to attach the semiconductor substrates 141 and 142. As shown in FIG. 11, the light source 121, a moving amount detection photodetector 131, and a reference position detection photodetector 132 are arranged so that the upper end of the light source 121 and the upper surfaces of the photodetectors 131 and 132 are substantially leveled with each other.

As shown in FIG. 12, two electrical circuits 171 and 172 are electrically connected to each other through bonding wires 156. In other words, the electric wiring lines that connect the two electrical circuits 171 and 172 comprise the bonding wires 156.

With this arrangement, a compact, high-performance encoder can be provided technically easily.

According to this embodiment, the electric wiring lines that connect the two electrical circuits 171 and 172 are the bonding wires 156. Alternatively, these electric wiring lines may be electric wiring lines formed on the surface of or in the housing 180.

Third Embodiment

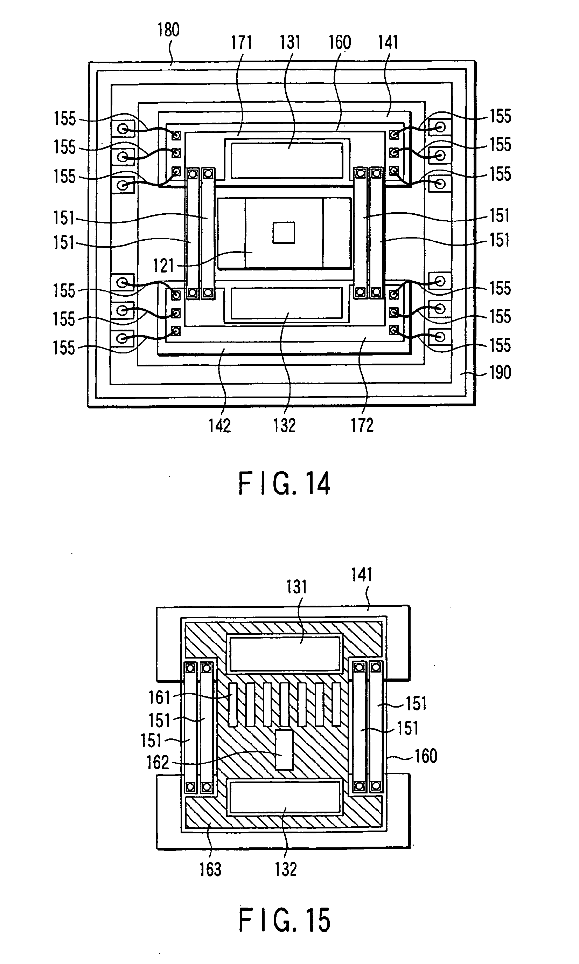

FIG. 13 is a sectional view of a sensor head in a reflective optical encoder according to the third embodiment of the present invention. FIG. 14 is a plan view, seen from the scale side, of the sensor head shown in FIG. 13. The section of FIG. 13 corresponds to the section of FIG. 2. Referring to FIGS. 13 and 14, members indicated by the same reference numerals as those shown in FIGS. 1 and 2 are similar members, and a detailed description thereof will be omitted.

The basic arrangement and operation of the reflective optical encoder of the third embodiment are similar to those of the reflective optical encoder of the second embodiment. A description will be made on portions that are different from their equivalents in the second embodiment.

As shown in FIG. 13, the sensor head of this embodiment has a transparent member 160. The transparent member 160 is located between a light source 121 and a lid member 190, and its two ends are respectively supported by semiconductor substrates 141 and 142.

As shown in FIG. 14, the transparent member 160 comprises electric wiring lines 151 on its surface that faces the semiconductor substrates 141 and 142. The electric wiring lines 151 connect electrical circuits 171 and 172 to each other.

With this arrangement, wire bonding need not be performed across the two semiconductor substrates 141 and 142, and accordingly the electric wiring lines can be easily formed and connected simultaneously.

In this embodiment, a slit may be formed in the transparent member 160, and detection using a Talbot image, which is described in the first embodiment, can be performed.

FIG. 15 is a plan view, seen from the scale side, of a portion of a sensor head using a Talbot image, as a modification of the third embodiment, including the transparent member 160 and semiconductor substrate 141 and 142. According to this modification, slit apertures 161 and 162 and a light-shielding portion 163 are formed in the transparent member 160. The slit apertures 161 and 162 are located on an optical path along which a light beam projected from the light source 121 is directed to the scale 110. No light-shielding portions but apertures are formed above the moving amount detection photodetector 131 and reference position detection photodetector 132.

With this arrangement, a Talbot image can be formed and detected easily. Therefore, a compact, low-cost, and higher-performance reflective optical encoder can be formed.

In all the embodiments described above, the photodetectors on the semiconductor substrates 141 and 142 are respectively a moving amount detection photodetector and reference position detection photodetector. Alternatively, the both photodetectors may be moving amount detection photodetectors, or photodetectors to detect periodic patterns having different pitches as in, e.g., a vernier absolute encoder.

In all the embodiments described above, by using an LED as the light source 121, both the requirements of low cost and high performance can be met. By using an RCLED (Resonant Cavity LED) or SLD (Super Luminescent Diode) as the light source 121, due to its further excellent coherency, the characteristics of the encoder can be further improved. In addition, by using various types of light sources such as a surface-emitting laser, edge emitting laser, current confinement type LED, or the like, an encoder can be formed in accordance with a purpose.

**Claims**

1. A sensor head (120) that is combined with a scale (110) having an optical pattern (111, 112) to constitute a reflective optical encoder **characterized by** comprising:

   a light source (121, 122) that projects a light beam to be applied to the scale (110);
   two semiconductor substrates (141, 142) that respectively have photodetectors that detect the light beam reflected and modulated by the optical pattern (111, 112) of the scale (110) and electrical pads that are configured to be connected to an external circuit, the two semiconductor substrates each having an electrical circuit that processes signals output from the photodetectors;
   the electrical circuits being arranged on the two substrates considering their characteristics
   electric wiring lines (151, 152, 153, 154, 155, 156) that electrically connect the electrical pads of the two semiconductor substrates (141, 142); and
   a package (180, 190) that contains the light source (121, 122) and semiconductor substrates (141, 142).

2. A head (120) according to claim 1, **characterized in that** the electric wiring lines (151, 152, 153, 154, 155, 156) include an electric wiring line (151, 152, 153, 154, 156) that transmits a signal a signal from one of the photodetectors on the two semiconductor substrates (141, 142) to the electrical circuit on the other-semiconductor substrate.

3. A head (120) according to claim 1, **characterized in that** the electric wiring lines (151, 152, 153, 154, 155, 156) include an electric wiring line (151, 152, 153, 154, 156) that allows to be shared a reference signal for the electrical circuits (171, 172) on the semiconductor substrates (141, 142).

4. A head (120) according to claim 1, **characterized in that** one of the photodetectors comprises a moving amount detection photodetector (131) that detects a signal in accordance with movement of the scale (110), the two semiconductor substrates (141, 142) comprise a first semiconductor substrate (141) that has the moving amount detection photodetector (131) and a second semiconductor substrate (142), an electrical circuit (171) of the first semiconductor substrate (141) includes an analog circuit (173) that processes a current signal output from the moving amount detection photodetector (131) to output an analog signal, and an electrical circuit (172) of the second semiconductor substrate (142) includes a pulse circuit (175) that pulses the analog signal to output a digital signal.

5. A head (120) according to claim 1, **characterized in that** one of the photodetectors comprises a moving amount detection photodetector (131) that detects a signal in accordance with movement of the scale (110), the two semiconductor substrates (141, 142) comprise a first semiconductor substrate (141) that has the moving amount detection photodetector (131) and a second semiconductor substrate (142), an electrical circuit (171) of the first semiconductor substrate (141) includes an analog circuit (173) that processes a current signal output from the moving amount detection photodetector (131) to output an analog signal, and an electrical circuit (172) of the second semiconductor substrate (142) includes a interpolator (176) that interporates the analog signal.

6. A head (120) according to claim 1, **characterized in that** one of the photodetectors comprises a moving amount detection photodetector (131) that detects a signal in accordance with movement of the scale (110), the two semiconductor substrates (141, 142) comprise a first semiconductor substrate (141) that has the moving amount detection photodetector (131) and a second semiconductor substrate (142), an electrical circuit (171) of the first semiconductor substrate (141) includes an analog circuit (173) that processes a current signal output from the moving amount detection photodetector (131) to output an analog signal, and an electrical circuit (172) of the second semiconductor substrate (142) includes a pulse circuit (175) that pulses the analog signal to output a digital signal and a interpolator (176) that interporates the analog signal.

7. A head (120) according to claim 1, **characterized in that** the two semiconductor substrates (141, 142) comprise a first semiconductor substrate (141) and a second semiconductor substrate (142), the photodetector on the first semiconductor substrate (141) comprises a moving amount detection photodetector (131) that detects a signal in accordance with movement of the scale (110), and the photodetector on the second semiconductor substrate (142) comprises a reference position detection photodetector (132) that detects a signal in accordance with a reference position of the scale (110).

8. A head (120) according to claim 7, **characterized in that** the electrical circuit (171) of the first semiconductor substrate (141) includes a first analog circuit (173) that processes a periodic signal output from the moving amount detection photodetector (131), and the electrical circuit (172) of the second semiconductor substrate (142) includes a second analog circuit (177) that processes the reference position signal output from the reference position detection photodetector (132) and a pulse circuit (175) that pulses the periodic signal output from the first analog circuit (173).

9. A head (120) according to claim 7, **characterized in that** the electrical circuit (171) of the first semiconductor substrate (141) includes a first analog circuit (173) that processes a periodic signal output from the moving amount detection photodetector (131), and the electrical circuit (172) of the second semiconductor substrate (142) includes a second analog circuit (177) that processes the reference position signal output from the reference position detection photodetector (132) and a interpolator (176) that interporates the periodic signal output from the first analog circuit (173).

10. A head (120) according to claim 7, **characterized in that** the electrical circuit (171) of the first semiconductor substrate (141) includes a first analog circuit (173) that processes a periodic signal output from the moving amount detection photodetector (131), and the electrical circuit (172) of the second semiconductor substrate (142) includes a second analog circuit (177) that processes the reference position signal output from the reference position detection photodetector (132), a pulse circuit (175) that pulses the periodic signal output from the first analog circuit (173), and a interpolator (176) that interporates the periodic signal output from the first analog circuit (173).

11. A head (120) according to claim 7, **characterized in that** the two semiconductor substrates (141, 142) are arranged on two sides of the light source (121, 122) in a direction substantially perpendicular to a moving direction of the scale (110).

12. A head (120) according to claim 1, **characterized in that** the package (180, 190) has a box-like housing (180) and a lid member (190) having a light-transmitting portion, the light source (121, 122) is fixed to the housing (180), the semiconductor substrates (141, 142) are fixed to the lid member (190), and at least some of the electric wiring lines (151, 152, 153, 154, 155, 156) are formed on the lid member (190).

13. A head (120) according to claim 1, **characterized by** further comprising a slit (161) on an optical path along which the light beam projected from the light source (121, 122) is directed to the scale (110).

14. A head (120) according to claim 1, **characterized in that** at least one of the electric wiring lines (151, 152, 153, 154, 155, 156) is not exposed to an outside of the package (180, 190).

**Patentansprüche**

1. Sensorkopf (120), der mit einer Maßeinteilung (110) kombiniert ist, die ein optisches Muster (111, 112) aufweist, um einen reflektierenden optischen Geber zu bilden,
   **gekennzeichnet durch**
   eine Lichtquelle (121, 122), die einen Lichtstrahl so projiziert, dass er auf die Maßeinteilung (110) aufgebracht wird; zwei Halbleitersubstrate (141, 142), die jeweils Photodetektoren, die den Lichtstrahl erfassen, der von dem optischen Muster (111, 112) der Maßeinteilung (110) reflektiert und moduliert wurde, und elektrische Kontaktierungsflächen, die so ausgestaltet sind, dass sie mit einer externen Schaltung verbunden sind, aufweisen, wobei jedes der zwei Halbleitersubstrate eine elektrische Schaltung aufweist, die Signale verarbeitet, welche von den Photodetektoren ausgegeben werden; wobei die elektrischen Schaltungen unter Berücksichtigung ihrer Eigenschaften an den zwei Substraten angeordnet sind;

elektrische Drahtleitungen (151, 152, 153, 154, 155, 156), welche die elektrischen Kontaktierungsflächen der zwei Halbleitersubstrate (141, 142) elektrisch verbinden; und ein Gehäuse (180, 190), in dem die Lichtquelle (121, 122) und die Halbleitersubstrate (141, 142) enthalten sind.

2. Kopf (120) nach Anspruch 1, **dadurch gekennzeichnet, dass** die elektrischen Drahtleitungen (151, 152, 153, 154, 155, 156) eine elektrische Drahtleitung (151, 152, 153, 154, 156) aufweisen, die ein Signal von einem der Photodetektoren an den zwei Halbleitersubstraten (141, 142) zu der elektrischen Schaltung an dem anderen Halbleitersubstrat überträgt.

3. Kopf (120) nach Anspruch 1, **dadurch gekennzeichnet, dass** die elektrischen Drahtleitungen (151, 152, 153, 154, 155, 156) eine elektrische Drahtleitung (151, 152, 153, 154, 156) aufweisen, die es gestattet, dass ein Referenzsignal von den elektrischen Schaltungen (171, 172) an den Halbleitersubstraten (141, 142) gemeinsam benutzt wird.

4. Kopf (120) nach Anspruch 1, **dadurch gekennzeichnet, dass** einer der Photodetektoren einen Photodetektor (131) zum Erfassen eines Bewegungsbetrags aufweist, der ein Signal gemäß einer Bewegung der Maßeinteilung (110) erfasst, dass die zwei Halbleitersubstrate (141, 142) ein erstes Halbleitersubstrat (141), das den Photodetektor (131) zum Erfassen eines Bewegungsbetrags aufweist, und ein zweites Halbleitersubstrat (142) aufweisen, dass eine elektrische Schaltung (171) des ersten Halbleitersubstrats (141) eine analoge Schaltung (173) aufweist, die ein Stromsignal, das von dem Photodetektor (131) zum Erfassen eines Bewegungsbetrags ausgegeben wurde, verarbeitet, um ein analoges Signal auszugeben, und dass eine elektrische Schaltung (172) des zweiten Halbleitersubstrats (142) eine Impulsschaltung (175) aufweist, die das analoge Signal impulsweise sendet, um ein digitales Signal auszugeben.

5. Kopf (120) nach Anspruch 1, **dadurch gekennzeichnet, dass** einer der Photodetektoren einen Photodetektor (131) zum Erfassen eines Bewegungsbetrags aufweist, der ein Signal gemäß einer Bewegung der Maßeinteilung (110) erfasst, dass die zwei Halbleitersubstrate (141, 142) ein erstes Halbleitersubstrat (141), das den Photodetektor (131) zum Erfassen eines Bewegungsbetrags aufweist, und ein zweites Halbleitersubstrat (142) aufweisen, dass eine elektrische Schaltung (171) des ersten Halbleitersubstrats (141) eine analogen Schaltung (173) aufweist, die ein Stromsignal, das von dem Photodetektor (131) zum Erfassen eines Bewegungsbetrags ausgegeben wurde, verarbeitet, um ein analoges Signal auszugeben, und dass eine elektrische Schaltung (172) des zweiten Halbleitersubstrats (142) einen Interpolator (176) aufweist, der das analoge Signal interpoliert.

6. Kopf (120) nach Anspruch 1, **dadurch gekennzeichnet, dass** einer der Photodetektoren einen Photodetektor (131) zum Erfassen eines Bewegungsbetrags aufweist, der ein Signal gemäß einer Bewegung der Maßeinteilung (110) erfasst, dass die zwei Halbleitersubstrate (141, 142) ein erstes Halbleitersubstrat (141), das den Photodetektor (131) zum Erfassen eines Bewegungsbetrags aufweist, und ein zweites Halbleitersubstrat (142) aufweisen, dass eine elektrische Schaltung (171) des ersten Halbleitersubstrats (141) eine analoge Schaltung (173) aufweist, die ein Stromsignal, das von dem Photodetektor (131) zum Erfassen eines Bewegungsbetrags ausgegeben wurde, verarbeitet, um ein analoges Signal auszugeben, und dass eine elektrische Schaltung (172) des zweiten Halbleitersubstrats (142) eine Impulsschaltung (175), die das analoge Signal impulsweise sendet, um ein digitales Signal auszugeben, und einen Interpolator (176), der das analoge Signal interpoliert, aufweist.

7. Kopf (120) nach Anspruch 1, **dadurch gekennzeichnet, dass** die zwei Halbleitersubstrate (141, 142) ein erstes Halbleitersubstrat (141) und ein zweites Halbleitersubstrat (142) aufweisen, dass der Photodetektor an dem ersten Halbleitersubstrat (141) einen Photodetektor (131) zum Erfassen eines Bewegungsbetrags aufweist, der ein Signal gemäß einer Bewegung der Maßeinteilung (110) erfasst, und dass der Photodetektor an dem zweiten Halbleitersubstrat (142) einen Photodetektor (132) zum Erfassen einer Bezugsposition aufweist, der ein Signal gemäß einer Bezugsposition der Maßeinteilung (110) erfasst.

8. Kopf (120) nach Anspruch 7, **dadurch gekennzeichnet, dass** die elektrische Schaltung (171) des ersten Halbleitersubstrats (141) eine erste analoge Schaltung (173) aufweist, die ein periodisches Signal verarbeitet, das von dem Photodetektor (131) zum Erfassen eines Bewegungsbetrags ausgegeben wurde, und dass die elektrische Schaltung (172) des zweiten Halbleitersubstrats (142) eine zweite analoge Schaltung (177), die das Bezugspositionssignal verarbeitet, das von dem Photodetektor (132) zum Erfassen einer Bezugsposition ausgegeben wurde, und eine Impulsschaltung (175), die das periodische Signal impulsweise sendet, das von der ersten analogen Schaltung (173) ausgegeben wurde, aufweist.

9. Kopf (120) nach Anspruch 7, **dadurch gekennzeichnet, dass** die elektrische Schaltung (171) des ersten Halbleitersubstrats (141) eine erste analoge Schaltung (173) aufweist, die ein periodisches Signal verarbeitet, das von dem Photodetektor (131) zum Erfassen eines Bewegungsbetrags ausgegeben wurde, und dass die elektrische Schaltung (172) des zweiten Halbleitersubstrats (142) eine zweite analoge Schaltung (177), die das Bezugspositionssignal verarbeitet, das von dem Photodetektor (132) zum Erfassen einer Bezugsposition ausgegeben wurde, und einen Interpolator (176), der das periodische Signal interpoliert, das von der ersten analogen Schaltung (173) ausgegeben wurde, aufweist.

10. Kopf (120) nach Anspruch 7, **dadurch gekennzeichnet, dass** die elektrische Schaltung (171) des ersten Halbleitersubstrats (141) eine erste analoge Schaltung (173) aufweist, die ein periodisches Signal verarbeitet, das von dem Photodetektor (131) zum Erfassen eines Bewegungsbetrags ausgegeben wurde, und die elektrische Schaltung (172) des zweiten Halbleitersubstrats (142) eine zweite analoge Schaltung (177), die das Bezugspositionssignal verarbeitet, das von dem Photodetektor (132) zum Erfassen einer Bezugsposition ausgegeben wurde, eine Impulsschaltung (175), die das periodische Signal impulsweise sendet, das von der ersten analogen Schaltung (173) ausgegeben wurde, und einen Interpolator (176), der das periodische Signal interpoliert, das von der ersten analogen Schaltung (173) ausgegeben wurde, aufweist.

11. Kopf (120) nach Anspruch 7, **dadurch gekennzeichnet, dass** die zwei Halbleitersubstrate (141, 142) an zwei Seiten der Lichtquelle (121, 122) in einer Richtung im Wesentlichen senkrecht zu einer Bewegungsrichtung der Maßeinteilung (110) angeordnet sind.

12. Kopf (120) nach Anspruch 1, **dadurch gekennzeichnet, dass** das Gehäuse (180, 190) ein boxähnliches Gehäuse (180) und ein Deckelelement (190) mit einem lichtübertragenden Abschnitt aufweist, dass die Lichtquelle (121, 122) an dem Gehäuse (180) befestigt ist, dass die Halbleitersubstrate (141, 142) an dem Deckelelement (190) befestigt sind, und dass wenigstens einige der elektrischen Drahtleitungen (151, 152, 153, 154, 155, 156) an dem Deckelelement (190) ausgeformt sind.

13. Kopf (120) nach Anspruch 1, **dadurch gekennzeichnet, dass** er ferner an einem optischen Weg, entlang dem der Lichtstrahl, der von der Lichtquelle (121, 122) ausgegeben wurde, zu der Maßeinteilung (110) gerichtet ist, einen Schlitz (161) aufweist.

14. Kopf (120) nach Anspruch 1, **dadurch gekennzeichnet, dass** wenigstens eine der elektrischen Drahtleitungen (151, 152, 153, 154, 155, 156) nicht zur Außenseite des Gehäuses (180, 190) frei liegt.

**Revendications**

1. Tête de capteur (120) qui est combinée avec une échelle (110) comprenant un modèle optique (111, 112) pour constituer un codeur optique réflectif **caractérisée en ce qu'**elle comprend :

   une source de lumière (121, 122) qui projette un faisceau lumineux devant être appliqué à l'échelle (110) ;
   deux substrats semi-conducteurs (141, 142) qui ont respectivement des photodétecteurs qui détectent le faisceau lumineux réfléchi et modulé par le modèle optique (111, 112) de l'échelle (110) et des blocs électriques qui sont configurés pour être connectés à un circuit externe, les deux substrats semi-conducteurs ayant chacun un circuit électrique qui traite la sortie de signaux provenant des photodétecteurs ;
   les circuits électriques étant agencés sur les deux substrats en considérant leurs caractéristiques ;
   des lignes électriques (151, 152, 153, 154, 155, 156) qui relient électriquement les blocs électriques des deux substrats semi-conducteurs (141, 142) ; et
   un emballage (180, 190) qui contient la source de lumière (121, 122) et les substrats semi-conducteurs (141, 142).

2. Tête (120) selon la revendication 1, **caractérisée en ce que** les lignes électriques (151, 152, 153, 154, 155, 156) comprennent une ligne électrique (151, 152, 153, 154, 156) qui transmet un signal en provenance d'un des photodétecteurs sur les deux substrats semi-conducteurs (141, 142) au circuit électrique sur l'autre substrat semi-conducteur.

3. Tête (120) selon la revendication 1, **caractérisée en ce que** les lignes électriques (151, 152, 153, 154, 155, 156) comprennent une ligne électrique (151, 152, 153, 154, 156) qui permet le partage d'un signal de référence pour les circuits électriques (171, 172) sur les substrats semi-conducteurs (141, 142).

4. Tête (120) selon la revendication 1, **caractérisée en ce qu'**un des photodétecteurs comprend un photodétecteur de détection de quantité de mouvement (131) qui détecte un signal selon le mouvement de l'échelle (110), les deux substrats semi-conducteurs (141, 142) comprennent un premier substrat semi-conducteur (141) qui comprend le photodétecteur de détection de quantité de mouvement (131) et un second substrat semi-conducteur (142), un circuit électrique (171) du premier substrat semi-conducteur (141) comprend un circuit analogique (173) qui traite une sortie de signal actuelle provenant du photodétecteur de détection de quantité de mouvement (131) pour fournir en sortie un signal analogique, et un circuit électrique (172) du second substrat semi-conducteur (142) comprend un circuit à impulsions (175) qui crée des impulsions dans le signal analogique pour produire en sortie un signal numérique.

5. Tête (120) selon la revendication 1, **caractérisée en ce qu'**un des photodétecteurs comprend un photodétecteur de détection de quantité de mouvement (131) qui détecte un signal selon le mouvement de l'échelle (110), les deux substrats semi-conducteurs (141, 142) comprennent un premier substrat semi-conducteur (141) qui comprend le photodétecteur de détection de quantité de mouvement (131) et un second substrat semi-conducteur (142), un circuit électrique (171) du premier substrat semi-conducteur (141) comprend un circuit analogique (173) qui traite une sortie de signal actuelle provenant du photodétecteur de détection de quantité de mouvement (131) pour fournir en sortie un signal analogique, et un circuit électrique (172) du second substrat semi-conducteur (142) comprend un dispositif d'interpolation (176) qui effectue une interpolation du signal analogique.

6. Tête (120) selon la revendication 1, **caractérisée en ce qu'**un des photodétecteurs comprend un photodétecteur de détection de quantité de mouvement (131) qui détecte un signal selon le mouvement de l'échelle (110), les deux substrats semi-conducteurs (141, 142) comprennent un premier substrat semi-conducteur (141) qui comprend le photodétecteur de détection de quantité de mouvement (131) et un second substrat semi-conducteur (142), un circuit électrique (171) du premier substrat semi-conducteur (141) comprend un circuit analogique (173) qui traite une sortie de signal actuelle provenant du photodétecteur de détection de quantité de mouvement (131) pour fournir en sortie un signal analogique, et un circuit électrique (172) du second substrat semi-conducteur (142) comprend un circuit à impulsions (175) qui crée des impulsions dans le signal analogique pour produire en sortie un signal numérique et un dispositif d'interpolation (176) qui effectue une interpolation du signal analogique.

7. Tête (120) selon la revendication 1, **caractérisée en ce que** les deux substrats semi-conducteurs (141, 142) comprennent un premier substrat semi-conducteur (141) et un second substrat semi-conducteur (142), le photodétecteur sur le premier substrat semi-conducteur (141) comprend un photodétecteur de détection de quantité de mouvement (131) qui détecte un signal selon le mouvement de l'échelle (110), et le photodétecteur sur le second substrat semi-conducteur (142) comprend un photodétecteur de détection de position de référence (132) qui détecte un signal selon une position de référence de l'échelle (110).

8. Tête (120) selon la revendication 7, **caractérisée en ce que** le circuit électrique (171) du premier substrat semi-conducteur (141) comprend un premier circuit analogique (173) qui traite une sortie de signal périodique provenant du photodétecteur de détection de quantité de mouvement (131) et le circuit électrique (172) du second substrat semi-conducteur (142) comprend un second circuit analogique (177) qui traite la sortie du signal de position de référence provenant du photodétecteur de détection de position de référence (132) et un circuit à impulsions (175) qui crée des impulsions à la sortie de signal périodique provenant du premier circuit analogique (173).

9. Tête (120) selon la revendication 7, **caractérisée en ce que** le circuit électrique (171) du premier substrat semi-conducteur (141) comprend un premier circuit analogique (173) qui traite une sortie de signal périodique provenant du photodétecteur de détection de quantité de mouvement (131), et le circuit électrique (172) du second substrat semi-conducteur (142) comprend un second circuit analogique (177) qui traite la sortie du signal de position de référence provenant du photodétecteur de détection de position de référence (132) et un dispositif d'interpolation (176) qui effectue une interpolation du signal périodique produit en sortie par le premier circuit analogique (173).

10. Tête (120) selon la revendication 7, **caractérisée en ce que** le circuit électrique (171) du premier substrat semi-conducteur (141) comprend un premier circuit analogique (173) qui traite une sortie de signal périodique provenant du photodétecteur de détection de quantité de mouvement (131), et le circuit électrique (172) du second substrat semi-conducteur (142) comprend un second circuit analogique (177) qui traite la sortie du signal de position de référence provenant du photodétecteur de détection de position de référence (132), un circuit à impulsions (175) qui crée des impulsions dans le signal périodique produit en sortie par le premier circuit analogique (173) et un dispositif d'interpolation (176) qui effectue une interpolation du signal périodique produit en sortie par le premier circuit analogique (173).

**11.** Tête (120) selon la revendication 7, **caractérisée en ce que** les deux substrats semi-conducteurs (141, 142) sont agencés sur deux côtés de la source de lumière (121, 122) suivant une direction sensiblement perpendiculaire à une direction de déplacement de l'échelle (110).

**12.** Tête (120) selon la revendication 1, **caractérisée en ce que** l'emballage (180, 190) comprend un boîtier similaire à une boîte (180) et un couvercle (190) ayant une partie de transmission de lumière, la source de lumière (121, 122) est fixée au boîtier (180), les substrats semi-conducteurs (141, 142) sont fixés au couvercle (190) et au moins une partie des lignes électriques (151, 152, 153, 154, 155, 156) est formée sur le couvercle (190).

**13.** Tête (120) selon la revendication 1, **caractérisée en ce qu'**elle comprend en outre une fente (161) sur un chemin optique le long duquel le faisceau lumineux projeté depuis la source de lumière (121, 122) est dirigé vers l'échelle (110).

**14.** Tête (120) selon la revendication 1, **caractérisée en ce qu'**au moins une des lignes électriques (151, 152, 153, 154, 155, 156) n'est pas exposée à une partie externe de l'emballage (180, 190).

FIG.1

EP 1 614 998 B1

FIG. 2

FIG. 3

F I G. 4

111

112

110

FIG.5

A-Phase    B-Phase        Z-Phase

Signal
output

Scale
dispacement

FIG.6

F I G. 7

FIG.8

FIG.9

121  131  141          155

182

132  142     190

180

FIG. 10

110

142   132          131   141

FIG. 11    190

180

121

180  171  131  141
155  155
155  155
155  155
156  156
156  156
121
155  155
155  155
155  155
190
142  132  172

# F I G. 12

142  132  160  131  142
190
180
121

# F I G. 13

FIG. 14

FIG. 15

**EP 1 614 998 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1154242 A2
- US 5670781 A